# EUROPEAN PATENT SPECIFICATION

(11) **EP 2 856 715 B1**
(45) Date of publication and mention of the grant of the patent: **03.07.2019**
(21) Application number: 13728880.9
(22) Date of filing: 28.05.2013
(51) Int. Cl.: H04L 12/26, H04L 12/721, H04L 12/715, H04L 12/761, H04L 12/729, H04L 12/723, H04L 12/801, H04L 12/803, H04L 12/913

(54) **SYSTEM AND METHOD FOR MANAGING MPLS-TE OVERLOAD**
SYSTEM UND VERFAHREN ZUR VERWALTUNG EINER MPLS-TE-ÜBERLASTUNG
SYSTÈME ET PROCÉDÉ DE GESTION DE SURCHARGE MPLS-TE

(30) Priority: 30.05.2012 US 201261653219 P; 15.03.2013 US 201313838673
(43) Date of publication of application: 08.04.2015
(73) Proprietor: Provenance Asset Group LLC, Pittsford, NY 14534 (US)
(72) Inventor: JAIN, Pradeep, G., Mountain View, CA 94043-5219 (US); SINGH, Kanwar, D., Mountain View, CA 94043-5219 (US); SHAH, Jaishal, Mountain View, CA 94043 (US); VENKATARAMAN, Srikrishnan, Mountain View, CA 94043 (US)
(74) Representative: Louis Pöhlau Lohrentz
(86) International application number: PCT/US2013/042831
(87) International publication number: WO 2013/181130

(56) References cited:
- US-A1- 2006 182 035
- US-A1- 2006 198 308
- LE ROUX (EDITOR) FRANCE TELECOM J P VASSEUR (EDITOR) CISCO SYSTEM INC YUICHI IKEJIRI NTT COMMUNICATIONS RAYMOND ZHANG BT INFONET J: "IGP protocol extensions for Path Computation Element (PCE) Discovery; draft-ietf-pce-disco-proto-igp-02.txt", 20060601, vol. pce, no. 2, 1 June 2006 (2006-06-01), XP015045054, ISSN: 0000-0004

## Description

### FIELD OF THE INVENTION

The invention relates to the field of communication networks such as multi-protocol label switching (MPLS) networks and, more particularly but not exclusively, to resource overload detection and management mechanisms.

### BACKGROUND

Multiprotocol Label Switching (MPLS) enables efficient delivery of a wide variety of differentiated, end-to-end services. Multiprotocol Label Switching (MPLS) traffic engineering (TE) provides a mechanism for selecting efficient paths across an MPLS network based on bandwidth considerations and administrative rules. Each label switching router maintains a TE link state database with a current network topology. Once a path is computed, TE is used to maintain a forwarding state along that path.

In the case of Resource Reservation Protocol (RSVP) Inter-Domain TE-LSPs, a router or other network element or node may experience a resource overutilization condition (i.e., insufficient memory, processor, input/output or other resources) in response to receiving a large number of RSVP Packets. Such a condition may result in the RSVP/MPLS process temporarily dropping RSVP packets to conserve resources. If the condition persists, then the node may start tearing down existing MPLS-TE LSPs to release resources, which in turn may lead to service interruption in a Service Provider Network.

Document entitled "IGP protocol extensions for Path Computation Element Discovery", draft-ietf-pce-disco-proto-igp-02.txt from June 2006, defines OSPF and IS-IS extensions for the advertisement of PCE discovery information (congestion state) within an IGP area.

Document US2006/198308 A1 discloses a method enabling PCEs (path computation elements) to advertise their available path computation resources and congestion states with the use of IGP messages to one or more path computation clients.The sub-TLV is configured to contain the congestion information (use of a flag or a value indicating level or congestion).

### SUMMARY

The present invention is defined by a method for managing Multiprotocol Label Switching traffic engineering according to independent claim 1, a telecom network element according to independent claim 7 and a computer program and a computer readable storage medium according to claims 8 and 9 respectively.

### BRIEF DESCRIPTION OF THE DRAWINGS

The teachings herein can be readily understood by considering the following detailed description in conjunction with the accompanying drawings, in which:
FIG. 1 depicts a high-level block diagram of a system benefiting from various embodiments;
FIG. 2 depicts a flow diagram of a method according to one embodiment;
FIG.3 depicts a high-level block diagram of a computing device suitable for use in performing functions described herein.

To facilitate understanding, identical reference numerals have been used, where possible, to designate identical elements that are common to the figures.

### DETAILED DESCRIPTION OF THE INVENTION

Various embodiments provide systems, methods and/or apparatus for detecting, responding to, and otherwise managing MPLS-TE Overload conditions a manner adapted to minimize service impact.

Generally speaking, various embodiments are directed toward propagating information indicative of a MPLS TE-Overload condition. In particular, upon detecting such a condition, various MPLS/RSVP tasks inform a routing protocol (e.g., OSPF, IS-IS and the like) about this state. The routing protocol in turn communicates the overload condition to the nodes in the MPLS TE routing domain by inserting new flag or bit value in an OSPF Router Information Capability TLV (if using OSPF) or an IS-IS Router Capability TLV (if using IS-IS).

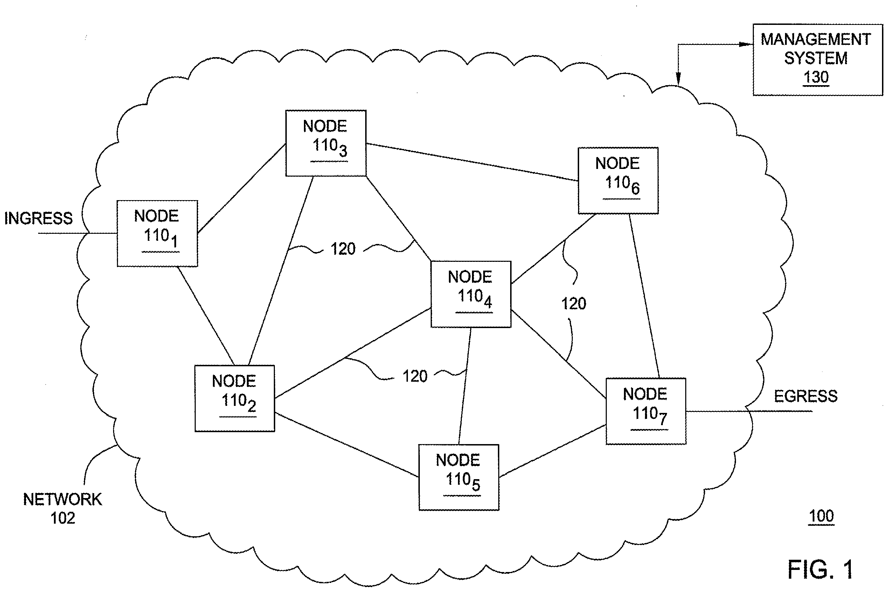

FIG. 1 depicts a high-level block diagram of a communication network benefiting from various embodiments. Specifically, the network 100 of FIG. 1 provides a Multi-Protocol Label Switching (MPLS) network supporting Resource Reservation Protocol (RSVP). The network may be modified by those skilled in the art to use other MPLS related protocols rather that the exemplary protocol discussed herein.

As depicted in FIG. 1, exemplary network 100 includes a plurality of nodes 110₁ - 110₇ (collectively, nodes 110) that are interconnected via a plurality of communication links 120 (collectively, communication links 120). The network 100 is managed by a management system 130, which may provide any suitable management functions for the network 100. While the network 100 may compr9sebe any suitable type of network and, thus, the nodes 110 may be any suitable types of nodes. For example, the network 102 may be an MPLS network in which nodes 110 are label switching routers (LSRs).

The nodes 110 are configured for transporting traffic within the network 102. The nodes 110 may transport traffic within network 102 using any suitable protocols (e.g., Internet Protocol (IP), MPLS, and the like, as well as various combinations thereof).

The nodes 110 are configured to collect link state information associated with the communication link(s) 120 to which each node 110 is connected. The nodes 110 are further configured to flood the collected link state information within network 102.

In one embodiment, the collection and flooding of link state information is performed using an Interior Gateway Protocol (IGP) supporting link-state, such as Open Shortest Path First (OSPF), Intermediate System to Intermediate System (IS-IS), or any other suitable protocol. In this manner, each node 110 receives link state information associated with network 102 and, thus, each node 110 is able to maintain a database including information suitable for use in computing paths (e.g., network topology information, link state information, and the like). This type of database is typically referred to as a Traffic Engineering (TE) database. The nodes 110 also may be configured to store link constraints for use in computing paths for network 102.

The link constraints may include any suitable link constraints which may be evaluated within the context of path computation. For example, the link constraints may include one or more of a link utilization for the link, a minimum link capacity required for a link, a maximum link bandwidth allowed for a link, a link cost associated with a link, an administrative constraint associated with the link, and the like, as well as various combinations thereof.

The link constraints may be configured on the nodes 110 in any suitable manner. For example, the link constraints may be pre-configured on the nodes 110 (e.g., automatically and/or by administrators), specified when requesting path computation or establishment, and the like, as well as various combinations thereof. In such embodiments, the link constraints may be provided to the nodes 110, for storage on the nodes 110, from any suitable source(s) of link constraints (e.g., a management system such as MS 130, or any other suitable source).

Although primarily depicted and described herein with respect to embodiments in which link constraints are configured on the nodes 110, in other embodiments the link constraints may not be stored on the nodes 110. For example, in embodiments in which path computation is performed by a device or devices other than nodes 110 (e.g., by a management system, such as MS 130), link constraints may only be available to the device(s) computing the paths.

In network 102, at least a portion of the nodes 110 may be configured to operate as ingress nodes into network 102 and, similarly, at least a portion of the nodes 110 may be configured to operate as egress nodes from network 102. In FIG. 1, for example, for a given path between node 110₁ and node 110₇, node 110₁ operates as an ingress node for the path and node 110₇ operates as an egress node for the path. It will be appreciated that each of the nodes 110 may operate as an ingress node only, an egress node only, or both an ingress and egress node (e.g., for different traffic flows).

As each of the nodes 110 may be configured to operate as an ingress node and/or as an egress node, each node 110 configured to operate as an ingress node may be referred to as an ingress node 110 and each node 110 configured to operate as an egress node may be referred to as an egress node 110.

In one embodiment, the ingress nodes 110 each are configured for computing paths to egress nodes 110, thereby enabling establishment of connections, from the ingress nodes 110 to the egress nodes 110, configured for transporting traffic via the network 102. The ingress nodes 110, in response to path computation requests, compute the requested paths based on the network information (e.g., network topology, link state, and the like, which may be available in a TE database and/or any other suitable database or databases) and link constraints available to the ingress nodes 110, respectively. The ingress nodes 110, upon computation of paths, may then initiate establishment of connections using the computed paths. The ingress nodes 110 may then transmit information to the egress nodes 110 via the established connections, at which point the egress nodes 110 may then forward the information to other networks and devices.

In one embodiment, MS 130 is configured for computing paths from ingress nodes 110 to egress nodes 110, thereby enabling establishing of connections, from the ingress nodes 110 to the egress nodes 110, configured for transporting traffic via the network 102. The MS 130, in response to path computation requests, computes the requested paths based on the network information (e.g., network topology, link state, and the like, which may be available in a TE database and/or any other suitable database or databases) and link constraints available to MS 130. The MS 130, upon computing a path, transmits path configuration information for the computed path to the relevant nodes 110, where the path configuration information may be used to establish a connection via the computed path within network 102. The ingress node 110 of the computed path may then transmit information to the egress node 110 via the connection, at which point the egress node 110 may then forward the information to other networks and devices.

In various embodiments, the network 102 comprises an MPLS network in which nodes 110 are label switching routers (LSRs) operating according to Multi-Protocol Label Switching (MPLS) Label Distribution Protocol (LDP).

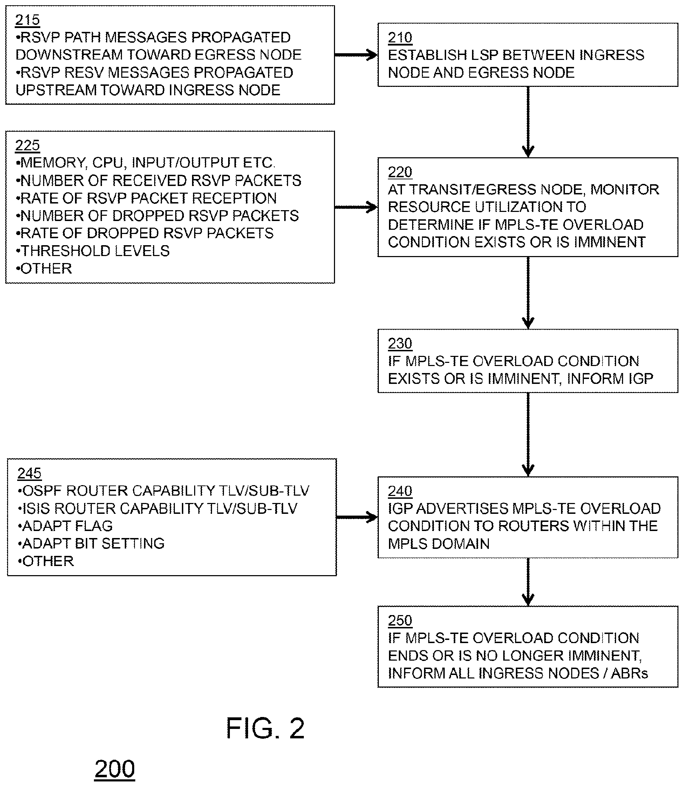

FIG. 2 depicts a flow diagram of a method according to one embodiment. Specifically, FIG. 2 depicts a flow diagram of a method for managing MPLS-TE Overload conditions a manner adapted to minimize service impact. The method 200 of figure 2 contemplates that some or all of a plurality of label switching routers (LSRs) associated with various label switched paths (LSPs) through a MPLS network operate to monitor various operating parameters to determine thereby whether a MPLS-TE overload condition exists or is imminent.

At step 210, a LSP is established between an ingress node and an egress node. Referring to box 215, the established LSP further supports upstream and downstream messages between the various LSRs. In particular, RSVP path message is propagated downstream toward the egress node while RSVP Resv messages are propagated upstream toward the ingress node.

At step 220, at one or more of the egress (or transit) nodes or LSRs forming the LSP, resource utilization is monitored to determine if a MPLS-TE overload condition exists or is imminent. Referring to box 225, this determination may be made with respect to memory, CPU, input/output or other resources, a number of received RSVP packets, a rate of RSVP packet reception, a number of dropped RSVP packet, the rate at which RSVP packets are dropped, one or more resource utilization threshold levels and/or other mechanisms. For example, a MPLS/RSVP task processing mechanism at the node or LSR continues polling is system resource utilization and/or RSVP packet reception statistics.

At step 230, in response to a determination that a MPLS-TE overload condition exists or is imminent at a particular node or LSR, the MPLS/RSVP task processing mechanism (or other mechanism) at the node or LSR informs the IGP of the overload condition.

At step 240, the IGP advertises the MPLS-TE overload condition to routers within the MPLS domain. Referring to box 245, such advertising is performed via a new or predefined flag or bit setting within a IGP router capability TLV or sub-TLV, such as a Open Shortest Path First (OSPF) routing protocol, Intermediate System To Intermediate System (IS-IS) routing protocol and the like. Other IGP advertising mechanisms may also be used. Further, other types of IGP may also be used.

Various embodiments described herein utilize IGP advertising mechanisms conforming to IS-IS CAPABILITY TLVs and sub-TLVs such as described in more detail in Internet Engineering Task Force (IETF) document "IS-IS Extensions for Advertising Router Information." As defined therein, the IS-IS router CAPABILITY TLV is composed of 1 octet specifying the number of bytes in the value field, and a variable length value field, starting with 4 octets of Router ID, indicating the source of the TLV, and followed by 1 octet of flags. A set of optional sub-TLVs may follow the flag field. Sub-TLVs are formatted as described in IETF Request for Comment (RFC) 3784. Various embodiments use assigned or unassigned bits or flags within a value field (or other fields) to indicate an overload condition.

Various embodiments described herein utilize IGP advertising mechanisms conforming to OSPF CAPABILITY TLVs and sub-TLVs such as described in more detail in IETF RFC 4970. The format of the Router Informational Capabilities TLV includes a "value" field comprising a variable length sequence of capability bits rounded to a multiple of 4 octets padded with undefined bits. Various embodiments use assigned or unassigned bits or flags within the value field (or other fields) to indicate an overload condition.

For example, upon determining that a MPLS-TE overload condition exists or is imminent, a MPLS/RSVP task processing mechanism at the node or LSR may inform IGP of the overload condition. The IGP in turn advertises this condition by adapting or setting to a first state a flag or bit setting of a OSPF router info capability TLV, IS-IS router info capability TLV, other TLV, existing LSP attribute and the like.

Various embodiments are adapted to propagating information indicative of a MPLS-TE overload condition upstream to a head-end router (such as an ingress LSP, ABR and the like) adapted to cause the head end router to initiate or trigger a reroute (if desired) of one or more LSPs supported by transit or egress LSRs. A head-end router receiving information indicative of a downstream MPLS-TE overload condition may request re-routing for any existing TE-LSP transiting the overloaded egress (or transit) nodes or LSRs forming the TE-LSP. Suitable mechanisms for requesting rerouting exist, including those described in more detail in various Internet Engineering Task Force (IETF) Request for Comment (RFC), such as RFC5710 (PathErr Message Triggered MPLS and GMPLS LSP Reroutes).

Generally speaking, when performing a path computation for any new TE-LSP, the head-end router should avoid a router advertising an MPLS-TE overload condition if possible. In this manner, for existing or new MPLS-TE LSPs associated with an overloaded router, one or more head-end routers operate to reduce the RSVP load (resource load) associated with the overloaded router. In this manner, the resources of the overloaded router are conserved such that existing RSVP sessions may quickly return to a normal working state.

Thus, in various embodiments, an IGP advertised overload condition operates to inhibit other LSRs from routing new LSPs through an overloaded LSR. Similarly, an IGP advertised non-overload condition operates to enable other LSRs to route existing and new LSPs to the non-overloaded LSR.

At step 250, in response to a determination that a MPLS-TE overload condition no longer exists or is imminent at a particular node or LSR, the MPLS/RSVP task processing mechanism (or other mechanism) at the node or LSR informs the IGP of the non-overload condition. The IGP advertises the MPLS-TE non-overload condition to routers within the MPLS domain in a manner similar to that described above with respect to step 240.

For example, upon determining that a MPLS-TE overload condition no longer exists or is no longer imminent, a MPLS/RSVP task processing mechanism at the node or LSR may inform IGP of the non-overload condition. The IGP in turn advertises this condition by adapting or setting to a second state a flag or bit setting of a OSPF router info capability TLV, IS-IS router info capability TLV, other TLV, existing LSP attribute and the like.

Thus, in one embodiment, a node entering a MPLS-TE Overloaded state informs the IGP of this state such that the IGP advertises the overload state to all the nodes in the in the MPLS-TE domain by, illustratively, setting a MPLS-TE overload flag or bit in a corresponding TLV or sub-TLV. Similarly, a node exiting a MPLS-TE Overloaded state (i.e., returning to a normal state) informs the IGP of this state such that the IGP advertises the normal state to all the nodes in the in the MPLS-TE domain by, illustratively, resetting a MPLS-TE overload flag or bit in a corresponding TLV or sub-TLV.

Thus, the IGP advertised overload condition is adapted to cause other LSRs to reroute existing LSPs around an overloaded LSR and/or routing new LSPs through an overloaded LSR. Similarly, an IGP advertised non-overload condition is adapted to cause other LSRs to again route existing or new LSPs through a previously overloaded LSR is such routing is appropriate in terms of cost constraints, path management criteria and so on.

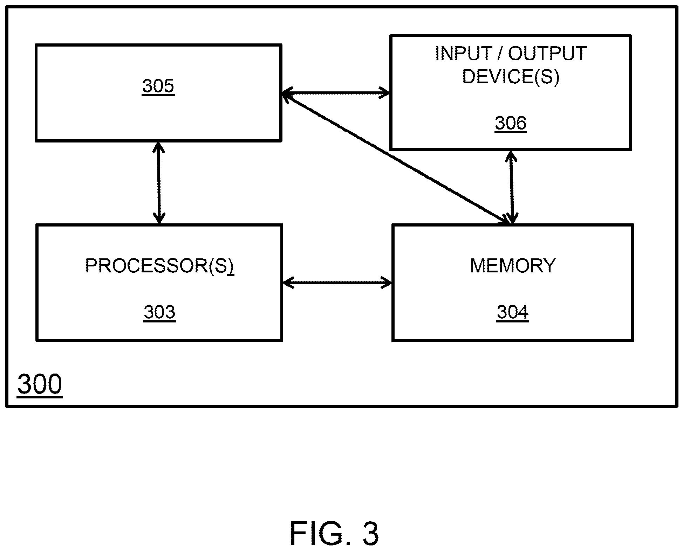

FIG. 3 depicts a high-level block diagram of a computing device, such as a processor in a telecom network element, suitable for use in performing functions described herein, such as the various network management functions, LSR functions, encapsulation functions, routing/path functions and so on associated with the various elements described above with respect to the figures.

As depicted in FIG. 3, computing device 300 includes a processor element 303 (e.g., a central processing unit (CPU) and/or other suitable processor(s)), a memory 304 (e.g., random access memory (RAM), read only memory (ROM), and the like), a cooperating module/process 305, and various input/output devices 306 (e.g., a user input device (such as a keyboard, a keypad, a mouse, and the like), a user output device (such as a display, a speaker, and the like), an input port, an output port, a receiver, a transmitter, and storage devices (e.g., a persistent solid state drive, a hard disk drive, a compact disk drive, and the like)).

It will be appreciated that the functions depicted and described herein may be implemented in software and/or in a combination of software and hardware, e.g., using a general purpose computer, one or more application specific integrated circuits (ASIC), and/or any other hardware equivalents. In one embodiment, the cooperating process 305 can be loaded into memory 304 and executed by processor 303 to implement the functions as discussed herein. Thus, cooperating process 305 (including associated data structures) can be stored on a computer readable storage medium, e.g., RAM memory, magnetic or optical drive or diskette, and the like.

It will be appreciated that computing device 300 depicted in FIG. 3 provides a general architecture and functionality suitable for implementing functional elements described herein or portions of the functional elements described herein.

It is contemplated that some of the steps discussed herein as software methods may be implemented within hardware, for example, as circuitry that cooperates with the processor to perform various method steps. Portions of the functions/elements described herein may be implemented as a computer program product wherein computer instructions, when processed by a computing device, adapt the operation of the computing device such that the methods and/or techniques described herein are invoked or otherwise provided. Instructions for invoking the inventive methods may be stored in tangible and non-transitory computer readable medium such as fixed or removable media or memory, transmitted via a tangible or intangible data stream in a broadcast or other signal bearing medium, and/or stored within a memory within a computing device operating according to the instructions.

Although various embodiments which incorporate the teachings of the present invention have been shown and described in detail herein, those skilled in the art can readily devise many other varied embodiments that still incorporate these teachings. Thus, while the foregoing is directed to various embodiments of the present invention, other and further embodiments of the invention may be devised without departing from the basic scope thereof. As such, the appropriate scope of the invention is to be determined according to the claims.

## Claims

1. A method for managing Multiprotocol Label Switching traffic engineering, MPLS-TE, loading, comprising:
monitoring a utilization level of a label switch router, LSR, (110) associated with one or more label switched path, LSPs;
in response to a determination of said utilization level being indicative of a MPLS-TE overload condition being imminent, transmitting an overload message toward an Interior Gateway Protocol, IGP, router (230), said overload message adapted to cause the IGP router to advertise said overload condition (240), wherein the IGP advertised overload condition is adapted to cause other LSRs to reroute existing LSPs around said LSR, or to inhibit LSRs from routing new LSPs through said LSR, wherein said LSR is overloaded;
in response to a determination that said utilization level is no longer indicative of a MPLS-TE overload condition being imminent, transmitting a non-overload message toward the Interior Gateway Protocol, IGP, router, said non-overload message adapted to cause the IGP router to advertise said non-overload condition;
said, by the IGP router, advertised non-overload condition being adapted to cause the other LSRs to again route existing or new LSPs through the LSR (110) which was previously overloaded; and
wherein said utilization level is associated with any of a number of received resource reservation protocol, RSVP, packets, a rate of RSVP packet reception and a number of dropped RSVP packets and a rate of dropped RSVP packets.

2. The method of claim 1,
wherein said utilization level is associated with any of a memory utilization level, a central processing unit, CPU, utilization level, and an input/output utilization level.

3. The method of claim 1,
wherein:
IGP is adapted to advertise said overload condition to routers within the IGP domain via a flag setting or bit state within a Router Information Capability Type-Length-Value, TLV, or sub-TLV.

4. The method of claim 3,
wherein said IGP comprises one of:
an Open Shortest Path First, OSPF, protocol advertising said overload condition via a flag setting or bit state within a OSPF Router Information Capability Type-Length-Value, TLV, or sub-TLV; and
an Intermediate System to Intermediate System, IS-IS, protocol advertising said overload condition via a flag setting or bit state within a IS-IS Router Information Capability TLV or sub-TLV.

5. The method of claim 3,
wherein said Router Information Capability TLV or sub-TLV advertises an overload condition via a flag setting or bit having a first state, and advertises a non-overload condition via said flag setting or bit having a second state.

6. The method of claim 1,
wherein said steps are performed at each of a plurality of LSRs (110), wherein each LSR (110) supports a plurality of LSPs and transmits said overload message toward any IGP router associated with the plurality of LSPs.

7. A telecom network element for managing Multiprotocol Label Switching traffic engineering, MPLS-TE, loading, comprising a processor configured for:
monitoring a utilization level of a label switch router, LSR, (110) associated with one or more label switched path, LSPs;
in response to a determination of said utilization level being indicative of a MPLS-TE overload condition being imminent, transmitting an overload message toward an Interior Gateway Protocol, IGP, router (230), said overload message adapted to cause the IGP router to advertise said overload condition (240), wherein the IGP advertised overload condition is adapted to cause other LSRs to reroute existing LSPs around said LSR, or to inhibit LSRs from routing new LSPs through said LSR, wherein said LSR is overloaded;
in response to a determination that said utilization level is no longer indicative of a MPLS-TE overload condition being imminent, transmitting a non-overload message toward the Interior Gateway Protocol, IGP, router, said non-overload message adapted to cause the IGP router to advertise said non-overload condition;
said, by the IGP router, advertised non-overload condition being adapted to cause the other LSRs to again route existing or new LSPs through the LSR (110) which was previously overloaded; and
wherein said utilization level is associated with any of a number of received resource reservation protocol, RSVP, packets, a rate of RSVP packet reception and a number of dropped RSVP packets and a rate of dropped RSVP packets.

8. A computer program comprising computer program code means characterized to perform the following program code steps when said program is run on a computer in a telecom network element for managing Multiprotocol Label Switching traffic engineering, MPLS-TE, loading:
monitoring a utilization level of a label switch router, LSR, (110) associated with one or more label switched path, LSPs;
in response to a determination of said utilization level being indicative of a MPLS-TE overload condition being imminent, transmitting an overload message toward an Interior Gateway Protocol, IGP, router (230), said overload message adapted to cause the IGP router to advertise said overload condition (240), wherein the IGP advertised overload condition is adapted to cause other LSRs to reroute existing LSPs around said LSR, or to inhibit LSRs from routing new LSPs through said LSR, wherein said LSR is overloaded;
in response to a determination that said utilization level is no longer indicative of a MPLS-TE overload condition being imminent, transmitting a non-overload message toward the Interior Gateway Protocol, IGP, router, said non-overload message adapted to cause the IGP router to advertise said non-overload condition;
said, by the IGP router, advertised non-overload condition being adapted to cause the other LSRs to again route existing or new LSPs through the LSR (110) which was previously overloaded; and
wherein said utilization level is associated with any of a number of received resource reservation protocol, RSVP, packets, a rate of RSVP packet reception and a number of dropped RSVP packets and a rate of dropped RSVP packets.

9. A computer readable storage medium comprising said program of claim 8.

## Patentansprüche

1. Verfahren zum Verwalten des Ladens mit Multiprotocol Label Switching Traffic Engineering, MPLS-TE, umfassend:
Überwachen eines Auslastungsniveaus eines Label Switch Routers, LSR (110), der einem oder mehreren Label Switched Path, LSP, zugeordnet ist;
als Reaktion auf eine Bestimmung, dass das Auslastungsniveau anzeigt, dass ein MPLS-TE-Überlastungszustand droht, Übertragen einer Überlastungsnachricht an einen das Interior Gateway Protocol, IGP, verwendenden Router (230), wobei die Überlastungsnachricht geeignet ist, den IGP-Router zu veranlassen, den Überlastungszustand (240) bekanntzugeben, wobei der durch IGP bekanntgegebene Überlastungszustand geeignet ist, weitere LSR zu veranlassen, bestehende LSP um den LSR zu leiten, oder LSR davon abzuhalten, neue LSP über den LSR zu leiten, wobei der LSR überlastet ist;
als Reaktion auf eine Bestimmung, dass das Auslastungsniveau nicht mehr anzeigt, dass ein MPLS-TE-Überlastungszustand droht, Übertragen einer Nichtüberlastungsnachricht an den das Interior Gateway Protocol, IGP, verwendenden Router, wobei die Nichtüberlastungsnachricht geeignet ist, den IGP-Router zu veranlassen, den Nichtüberlastungszustand bekanntzugeben;
wobei der durch den IGP-Router bekanntgegebene Nichtüberlastungszustand geeignet ist, die anderen LSR zu veranlassen, erneut bestehende oder neue LSP über den LSR (110) zu leiten, der zuvor überlastet war; und
wobei das Auslastungsniveau einer beliebigen Anzahl von erhaltenen, das Resource Reservation Protocol, RSVP, verwendenden Paketen, einer Empfangsrate für RSVP-Pakete und einer Anzahl verworfener RSVP-Pakete und einer Rate des Verwerfens von RSVP-Paketen zugeordnet ist.

2. Verfahren nach Anspruch 1,
wobei das Auslastungsniveau einem Speicherauslastungsniveau, einer zentralen Verarbeitungseinheit, CPU, einem Auslastungsniveau und einem Eingabe/Ausgabe-Auslastungsniveau zugeordnet sein kann.

3. Verfahren nach Anspruch 1,
wobei das IGP geeignet ist, Routern innerhalb der IGP-Domäne über eine Flag-Einstellung oder einen Bit-Status in einem Type-Length-Value, TLV, oder Sub-TLV der Router Information Capability den Überlastungszustand bekanntzugeben.

4. Verfahren nach Anspruch 3,
wobei das IGP eines aus Folgendem umfasst:
ein OSPF-Protokoll (Open Shortest Path First), das den Überlastungszustand über eine Flag-Einstellung oder einen Bit-Status in einem Type-Length-Value, TLV, oder Sub-TLV der OSPF Router Information Capability bekanntgibt; und
ein IS-IS-Protokoll (Intermediate System to Intermediate System), das den Überlastungszustand über eine Flag-Einstellung oder einen Bit-Status in einem TLV oder Sub-TLV der IS-IS-Router Information Capability bekanntgibt.

5. Verfahren nach Anspruch 3,
wobei der TLV oder Sub-TLV der Router Information Capability einen Überlastungszustand über eine Flag-Einstellung oder ein Bit, das einen ersten Zustand aufweist, bekanntgibt und einen Nichtüberlastungszustand über die Flag-Einstellung oder das Bit, das einen zweiten Zustand aufweist, bekanntgibt.

6. Verfahren nach Anspruch 1,
wobei die Schritte bei jedem von mehreren LSR (110) durchgeführt werden, wobei jeder LSR (110) mehrere LSP unterstützt und die Überlastungsnachricht an IGP-Router überträgt, die den mehreren LSP zugeordnet sind.

7. Telekommunikationsnetzwerkelement zum Verwalten des Ladens mit Multiprotocol Label Switching Traffic Engineering, MPLS-TE, einen Prozessor umfassend, der zu Folgendem ausgelegt ist:
Überwachen eines Auslastungsniveaus eines Label Switch Routers, LSR (110), der einem oder mehreren Label Switched Path, LSP, zugeordnet ist;
als Reaktion auf eine Bestimmung, dass das Auslastungsniveau anzeigt, dass ein MPLS-TE-Überlastungszustand droht, Übertragen einer Überlastungsnachricht an einen das Interior Gateway Protocol, IGP, verwendenden Router (230), wobei die Überlastungsnachricht geeignet ist, den IGP-Router zu veranlassen, den Überlastungszustand (240) bekanntzugeben, wobei der durch IGP bekanntgegebene Überlastungszustand geeignet ist, weitere LSR zu veranlassen, bestehende LSP um den LSR zu leiten, oder LSR davon abzuhalten, neue LSP über den LSR zu leiten, wobei der LSR überlastet ist;
als Reaktion auf eine Bestimmung, dass das Auslastungsniveau nicht mehr anzeigt, dass ein MPLS-TE-Überlastungszustand droht, Übertragen einer Nichtüberlastungsnachricht an den das Interior Gateway Protocol, IGP, verwendenden Router, wobei die Nichtüberlastungsnachricht geeignet ist, den IGP-Router zu veranlassen, den Nichtüberlastungszustand bekanntzugeben;
wobei der durch den IGP-Router bekanntgegebene Nichtüberlastungszustand geeignet ist, die anderen LSR zu veranlassen, erneut bestehende oder neue LSP über den LSR (110) zu leiten, der zuvor überlastet war; und
wobei das Auslastungsniveau einer beliebigen Anzahl von erhaltenen, das Resource Reservation Protocol, RSVP, verwendenden Paketen, einer Empfangsrate für RSVP-Pakete und einer Anzahl verworfener RSVP-Pakete und einer Rate des Verwerfens von RSVP-Paketen zugeordnet ist.

8. Computerprogramm, Computerprogrammcodemittel umfassend, die **dadurch gekennzeichnet sind, dass** sie die folgenden Programmcodeschritte ausführen, wenn das Programm auf einem Computer in einem Telekommunikationsnetzwerkelement zum Verwalten des Ladens mit Multiprotocol Label Switching Traffic Engineering, MPLS-TE, läuft:
Überwachen eines Auslastungsniveaus eines Label Switch Routers, LSR (110), der einem oder mehreren Label Switched Path, LSP, zugeordnet ist;
als Reaktion auf eine Bestimmung, dass das Auslastungsniveau anzeigt, dass ein MPLS-TE-Überlastungszustand droht, Übertragen einer Überlastungsnachricht an einen das Interior Gateway Protocol, IGP, verwendenden Router (230), wobei die Überlastungsnachricht geeignet ist, den IGP-Router zu veranlassen, den Überlastungszustand (240) bekanntzugeben, wobei der durch IGP bekanntgegebene Überlastungszustand geeignet ist, weitere LSR zu veranlassen, bestehende LSP um den LSR zu leiten, oder LSR davon abzuhalten, neue LSP über den LSR zu leiten, wobei der LSR überlastet ist;
als Reaktion auf eine Bestimmung, dass das Auslastungsniveau nicht mehr anzeigt, dass ein MPLS-TE-Überlastungszustand droht, Übertragen einer Nichtüberlastungsnachricht an den das Interior Gateway Protocol, IGP, verwendenden Router, wobei die Nichtüberlastungsnachricht geeignet ist, den IGP-Router zu veranlassen, den Nichtüberlastungszustand bekanntzugeben;
wobei der durch den IGP-Router bekanntgegebene Nichtüberlastungszustand geeignet ist, die anderen LSR zu veranlassen, erneut bestehende oder neue LSP über den LSR (110) zu leiten, der zuvor überlastet war; und
wobei das Auslastungsniveau einer beliebigen Anzahl von erhaltenen, das Resource Reservation Protocol, RSVP, verwendenden Paketen, einer Empfangsrate für RSVP-Pakete und einer Anzahl verworfener RSVP-Pakete und einer Rate des Verwerfens von RSVP-Paketen zugeordnet ist.

9. Computerlesbares Speichermedium, das Programm nach Anspruch 8 umfassend.

## Revendications

1. Procédé de gestion du chargement de l'ingénierie de trafic de commutation multiprotocole par étiquette, MPLS TE, consistant à :
surveiller un niveau d'utilisation d'un routeur de commutation par étiquette, LSR, (110) associé à un ou plusieurs chemins de commutation par étiquette, LSP ;
en réponse à une détermination dudit niveau d'utilisation indiquant qu'une condition de surcharge de MPLS TE est imminente, transmettre un message de surcharge vers un routeur de protocole de passerelle intérieure (IGP, Interior Gateway Protocol) (230), ledit message de surcharge étant conçu pour amener le routeur d'IGP à annoncer ladite condition de surcharge (240), la condition de surcharge annoncée par IGP étant adaptée pour amener d'autres LSR à réacheminer des LSP existants autour dudit LSR, ou à empêcher les LSR d'acheminer les nouveaux LSP à travers ledit LSR, ledit LSR étant surchargé ;
en réponse à une détermination selon laquelle ledit niveau d'utilisation n'indique plus qu'une condition de surcharge de MPLS TE est imminente, transmettre un message de non-surcharge vers le routeur d'IGP, un routeur de protocole de passerelle intérieure, ledit message de non-surcharge étant conçu pour amener le routeur d'IGP à annoncer ladite condition de non-surcharge ;
ladite condition de non-surcharge annoncée par le routeur d'IGP étant adaptée pour amener les autres LSR à acheminer à nouveau les LSP existants ou nouveaux à travers le LSR (110) qui était précédemment surchargé ; et
ledit niveau d'utilisation étant associé à l'un quelconque d'un certain nombre de paquets de protocole de réservation de ressources reçus, RSVP, d'un débit de réception de paquets de RSVP et d'un nombre de paquets de RSVP abandonnés et d'un débit de paquets de RSVP abandonnés.

2. Procédé selon la revendication 1,
dans lequel ledit niveau d'utilisation est associé à l'un quelconque d'un niveau d'utilisation de mémoire, d'une unité centrale de traitement, CPU, d'un niveau d'utilisation et d'un niveau d'utilisation d'entrée/sortie.

3. Procédé selon la revendication 1,
dans lequel :
l'IGP est adapté pour annoncer ladite condition de surcharge aux routeurs du domaine IGP par le biais d'un paramètre d'indicateur ou d'un état de bit dans un type-longueur-valeur, TLV, ou un sous-TLV de capacité d'information de routeur.

4. Procédé selon la revendication 3,
dans lequel ledit IGP comprend l'un des éléments suivants :
une ouverture prioritaire de chemin le plus court, OSPF (Open Shortest Path First), un protocole annonçant ladite condition de surcharge par le biais d'un réglage de drapeau ou d'un état de bit dans un type-longueur-valeur, TLV, ou un sous-TLV, de capacité d'information du routeur à OSPF ; et
un protocole ISIS (Intermediate System to Intermediate System) annonçant ladite condition de surcharge par le biais d'un paramètre d'indicateur ou un état de bit dans un TLV ou un sous-TLV de capacité d'information du routeur IS-IS.

5. Procédé selon la revendication 3,
dans lequel ladite TLV ou sous-TLV de capacité d'information de routeur annonce une condition de surcharge par le biais d'un indicateur ou d'un bit adoptant un premier état, et annonce une condition de non-surcharge par le biais dudit indicateur ou bit adoptant un second état.

6. Procédé selon la revendication 1,
dans lequel lesdites étapes sont exécutées au niveau de chacun d'une pluralité de LSR (110), chaque LSR (110) prenant en charge une pluralité de LSP et transmettant ledit message de surcharge vers tout routeur d'IGP associé à la pluralité de LSP.

7. Élément de réseau de télécommunication permettant de gérer le chargement de l'ingénierie de trafic de commutation multiprotocole par étiquette, MPLS TE, comprenant un processeur configuré pour :
surveiller un niveau d'utilisation d'un routeur de commutation par étiquette, LSR, (110) associé à un ou plusieurs chemins de commutation par étiquette, LSP ;
en réponse à une détermination dudit niveau d'utilisation indiquant qu'une condition de surcharge de MPLS TE est imminente, transmettre un message de surcharge vers un routeur de protocole de passerelle intérieure (IGP, Interior Gateway Protocol) (230), ledit message de surcharge étant conçu pour amener le routeur d'IGP à annoncer ladite condition de surcharge (240), la condition de surcharge annoncée par IGP étant adaptée pour amener d'autres LSR à réacheminer des LSP existants autour dudit LSR, ou à empêcher les LSR d'acheminer les nouveaux LSP à travers ledit LSR, ledit LSR étant surchargé ;
en réponse à une détermination selon laquelle ledit niveau d'utilisation n'indique plus qu'une condition de surcharge de MPLS TE est imminente, transmettre un message de non-surcharge vers le routeur d'IGP, un routeur de protocole de passerelle intérieure, ledit message de non-surcharge étant conçu pour amener le routeur d'IGP à annoncer ladite condition de non-surcharge ;
ladite condition de non-surcharge annoncée par le routeur d'IGP étant adaptée pour amener les autres LSR à acheminer à nouveau les LSP existants ou nouveaux à travers le LSR (110) qui était précédemment surchargé ; et
ledit niveau d'utilisation étant associé à l'un quelconque d'un certain nombre de paquets de protocole de réservation de ressources reçus, RSVP, d'un débit de réception de paquets de RSVP et d'un nombre de paquets de RSVP abandonnés et d'un débit de paquets de RSVP abandonnés.

8. Programme informatique comprenant un moyen de codage de programme informatique, **caractérisé en ce qu'**il est conçu pour exécuter les étapes suivantes de codage de programme lorsque ledit programme est exécuté sur un ordinateur dans un élément de réseau de télécommunication pour gérer le chargement d'ingénierie de trafic à commutation multiprotocole par étiquette, MPLS TE, consistant à :
surveiller un niveau d'utilisation d'un routeur de commutation par étiquette, LSR, (110) associé à un ou plusieurs chemins de commutation par étiquette, LSP ;
en réponse à une détermination dudit niveau d'utilisation indiquant qu'une condition de surcharge de MPLS TE est imminente, transmettre un message de surcharge vers un routeur de protocole de passerelle intérieure (IGP, Interior Gateway Protocol) (230), ledit message de surcharge étant conçu pour amener le routeur d'IGP à annoncer ladite condition de surcharge (240), la condition de surcharge annoncée par IGP étant adaptée pour amener d'autres LSR à réacheminer des LSP existants autour dudit LSR, ou à empêcher les LSR d'acheminer les nouveaux LSP à travers ledit LSR, ledit LSR étant surchargé ;
en réponse à une détermination selon laquelle ledit niveau d'utilisation n'indique plus qu'une condition de surcharge de MPLS TE est imminente, transmettre un message de non-surcharge vers le routeur d'IGP, un routeur de protocole de passerelle intérieure, ledit message de non-surcharge étant conçu pour amener le routeur d'IGP à annoncer ladite condition de non-surcharge ;
ladite condition de non-surcharge annoncée par le routeur d'IGP étant adaptée pour amener les autres LSR à acheminer à nouveau les LSP existants ou nouveaux à travers le LSR (110) qui était précédemment surchargé ; et
ledit niveau d'utilisation étant associé à l'un quelconque d'un certain nombre de paquets de protocole de réservation de ressources reçus, RSVP, d'un débit de réception de paquets de RSVP et d'un nombre de paquets de RSVP abandonnés et d'un débit de paquets de RSVP abandonnés.

9. Support de stockage lisible par ordinateur comprenant ledit programme de la revendication 8.
